Europäisches Patentamt

(19) European Patent Office

Office européen des brevets

(11) EP 0 721 388 B1

(12) FASCICULE DE BREVET EUROPEEN

(45) Date de publication et mention
de la délivrance du brevet:
**12.08.1998 Bulletin 1998/33**

(21) Numéro de dépôt: **95923387.5**

(22) Date de dépôt: **14.06.1995**

(51) Int. Cl.$^6$: **B22D 41/54**

(86) Numéro de dépôt international:
**PCT/FR95/00784**

(87) Numéro de publication internationale:
**WO 95/34395 (21.12.1995 Gazette 1995/54)**

(54) **PIECE DE COULEE COMPORTANT UNE COUCHE EXTERNE APTE A FORMER UNE COUCHE IMPERMEABLE AUX GAZ ET PROCEDE DE MISE EN ŒUVRE**

GUSSTEIL MIT EINER ÄUSSEREN SCHICHT GEEIGNET ZUR BILDUNG EINER GASDICHTEN SCHICHT SOWIE HERSTELLUNGSVERFAHREN DAFÜR

CASTING PART COMPRISING AN EXTERNAL LAYER APPROPRIATE TO FORM A GAS IMPERVIOUS LAYER, AND IMPLEMENTATION PROCESS

(84) Etats contractants désignés:
**AT BE DE ES GB IT SE**

(30) Priorité: **15.06.1994 FR 9407413**
**28.11.1994 FR 9414337**

(43) Date de publication de la demande:
**17.07.1996 Bulletin 1996/29**

(73) Titulaire: **VESUVIUS FRANCE S.A.**
**F-59750 Feignies (FR)**

(72) Inventeurs:
• **HANSE, Eric**
**B-7370 Dour-Elouges (BE)**
• **DUMAS, Philippe**
**F-59750 Feignies (FR)**

(74) Mandataire:
**Des Termes, Monique et al**
**c/o Société de Protection des Inventions**
**25, rue de Ponthieu**
**75008 Paris (FR)**

(56) Documents cités:
**EP-A- 0 198 925          EP-A- 0 423 793**
**EP-A- 0 503 316          DE-A- 3 805 334**
**DE-A- 4 100 352          FR-A- 2 316 027**
**LU-A-  75 140**

• **PATENT ABSTRACTS OF JAPAN vol. 017 no. 548 (M-1490) ,4 Octobre 1993 & JP,A,05 154628 (KUROSAKI REFRACT CO LTD;OTHERS: 01) 22 Juin 1993,**
• **PATENT ABSTRACTS OF JAPAN vol. 017 no. 548 (M-1490) ,4 Octobre 1993 & JP,A,05 154627 (SHINAGAWA REFRACT CO LTD) 22 Juin 1993,**

## Description

Dans la coulée en continu de l'acier, des pièces de matériau réfractaire sont utilisées pour canaliser et réguler l'écoulement de l'acier liquide et pour le protéger de la reoxydation lorsqu'il s'écoule d'une poche vers un repartiteur et du répartiteur vers un moule de coulée en continu. Le matériau refractaire est soumis à des conditions d'utilisation sévéres. Il subit des contraintes thermiques, une erosion par l'acier, une oxydation, et d'une manière générale toutes les réactions qui résultent d'interactions entre les constituants du matériau rétractaire et de l'acier.

Les matériaux refractaires utilises contiennent généralement du carbone. De manière fréquente ils utilisent une liaison carbone et sont composés d'un ou plusieurs oxydes refractaires tel que l'alumine, la zircone, l'argile, la magnesie, la silice, le carbure de silicium ou d'autres grains denses. Ces réfractaires contiennent aussi généralement des quantités significatives de carbone sous la forme de graphite, de graphite amorphe, de noir de carbone et une quantite supplémentaire de carbone provenant du liant utilisé.

L'invention concerne une pièce pour la coulée d'acier, cette pièce comportant un corps réalisé en un matériau réfractaire contenant du carbone. Elle s'applique notamment à la coulée d'acier entre une poche et un repartiteur de coulée en continu, et à la coulée d'acier entre un répartiteur et un moule de coulée en continu.

Elle concerne egalement un procédé de traitement thermique d'une pièce selon l'invention.

On connaît déjà (EP 2 695 848) une busette de coulée de métal qui comporte un corps en matériau réfractaire dans lequel est ménagé un canal d'écoulement du métal en fusion. La busette comporte une chambre annulaire disposée autour du canal à proximité de la périphérie de ce canal et s'étendant a peu prés sur toute sa longueur. La chambre est raccordée à des moyens de mise en dépression. Elle forme un écran a la migration des produits gazeux vers le canal d'écoulement. La busette peut comporter également une chemise en un matériau réfractaire sans carbone interposée entre la périphérie du canal et la chambre mise en dépression.

La dépression est maximale dans la zone localisée autour de la chambre annulaire. Mais, lorsqu'on s'éloigne de cette chambre, le réseau complexe de la porosité entraîne des pertes de charge importantes. Par suite, la dépression chute, ce qui limite considérablement l'évacuation des gaz formés. Il est donc très difficile d'éliminer les gaz à proximité directe de la zone de contact du réfractaire avec l'acier liquide.

On connaît également (GB-A-2 095 612) une quenouille de coulée. Elle comporte un corps et un nez renforce terminant le corps et réalisé en un matériau différent de celui du corps. Le matériau du corps et celui du nez sont copressés en une seule opération. En d'autres termes deux poudres de composition différentes, par exemple l'alumine graphite pour le corps et la zircone ou la magnésie pour le nez, sont introduites simultanément dans un même moule puis pressées et cuites simultanément.

Cependant, dans une quenouil e de ce type, la cohésion des grains d'alumine, de zircone et/ou de magnésie est obtenue par une liaison du type carbone, à savoir une liaison dans laquelle le carbone contenu dans le mélange constitue par polymérisation à chaud un réseau qui enserre les différents grains.

Les aciers agressifs à haute teneur en oxygène que l'on coule actuellement et qui ne sont pas toujours calmés, par exemple à l'aluminium ou au silicium ou qui le sont insuffisamment, érodent le nez d'une quenouille de ce type. Cela a pour conséquence une faible durée de vie de la quenouille et nécessite son remplacement fréquent.

D'autre part les réactions entre composés chimiques, particulièrement gazeux, qui peuvent se former à haute température dans le matériau réfractaire constituant le nez de la quenouille et dans l'acier liquide se produisent. Par exemple le monoxyde de carbone réduit certains éléments présents dans l'acier liquide à la surface du nez et provoque sur cette surface la précipitation d'oxydes en particulier d'oxyde d'aluminium. Les dépôts d'oxydes empêchent progressivement une fermeture complète du canal de coulée.

Le document EP-A-0 503 316 décrit des compositions de revêtement destinés à des pièces de coulée, comprenant du carbone, du diborure de zirconium et/ou du diborure de titane, et un ou plusieurs constituants choisis parmi la zircone, SiAlON, l'argile, l'alumine, la magnésie, la silice, le carbure de silicium, le nitrure de silicium, le nitrure de bore, la mullite et l'oxyde de chrome. Dans cette composition, la présence de diborure de zirconium ou de titane permet d'améliorer la résistance à l'oxydation et à l'érosion.

La présente invention a pour objet une pièce pour la coulée d'acier qui remédie à ces inconvénients de l'art antérieur. Cette pièce doit permettre d'empêcher totalement les réactions entre les composés chimiques, particulièrement gazeux, qui peuvent se former à haute température dans le matériau réfractaire constituant le corps de la pièce et dans l'acier liquide.

En outre, elle doit être aisée à fabriquer et d'un coût de revient peu élevé.

Ces buts sont atteints conformément à l'invention par le fait que la pièce pour la coulée d'acier qui comporte un corps réalisé en un matériau réfractaire comportant du carbone et une couche revêtant partiellement ou totalement le corps apte à former une couche imperméable aux gaz par chauffage, se caractérise en ce que cette couche comporte 4 à 9 % en poids de carbone et au moins un précurseur de frittage, et en ce qu'elle forme une couche imperméable aux gaz, oxydée et densifiée lorsqu'elle est portée à une température supérieure ou égale à 1000°C.

Grâce à la présence d'une couche imperméable aux gaz les composés chimiques, particulièrement gazeux, qui peuvent se former à haute température dans le matériau réfractaire constituant le corps de la pièce et dans l'acier liquide ne sont plus en contact direct et les réactions ne peuvent se faire. On remédie de ce fait à un grand nombre d'inconvénients des pièces de coulée de l'art antérieur.

Par exemple, dans le cas d'une busette, on remédie aux phénomènes de bouchage qui se produisent lorsque le monoxyde de carbone se formant dans le réfractaire réduit certains éléments présents dans l'acier liquide à la surface du canal d'écoulement de l'acier et provoque sur cette surface la précipitation d'oxydes en particulier d'oxyde d'aluminium. Les dépôts d'oxydes bouchent progressivement le canal de la busette, ce qui perturbe la régulation et réduit fortement sa durée d'utilisation. Ces dépôts peuvent aussi se détacher intempestivement et se retrouver comme inclusions au sein de l'acier solidifié. Par le fait que, selon l'invention, les échanges gazeux entre le corps réfractaire de la busette et l'acier sont empêchés, les phénomènes de bouchage connus antérieurement sont réduits de manière très importante et la qualité de l'acier coulé est améliorée. L'acier est plus propre, ayant moins d'inclusions.

La présence d'une couche dense et imperméable présente encore d'autres avantages. Elle réduit les phénomènes de corrosion.

En effet, dans les aciers à haute teneur en oxygène, la corrosion du matériau réfractaire est généralement accélérée par l'attaque de la liaison carbone par l'oxygène dissout en quantité importante. Elle réduit aussi la dégradation de la propreté de l'acier qui se produit en général par une reprise d'azote due à un passage d'air à travers le matériau réfractaire.

Une couche dure et dense sans carbone évite de tels phénoménes.

Dans le cas d'une quenouille la résistance du nez aux aciers qui ne sont pas calmés, ou qui le sont insuffisamment, est accrue de manière très importante. La durée de vie de la quenouille est prolongée et il en résulte une économie importante pour l'utilisateur.

On évite également les dépôts d'oxyde à la surface du nez de telle sorte que la régulation d'acier n'est pas perturbée. La fermeture étanche du trou de coulée reste en permanence possible, même après une longue sequence de coulée.

De préférence la couche externe de la busette est constituée d'un matériau réfractaire comportant des précurseurs de frittage. Ces précurseurs sont destinés à favoriser le phénoméne de frittage, c'est-à-dire de liaison de grain à grain. Il permet au frittage de se produire à une temperature plus basse et de s'exécuter en une durée plus courte.

Ces precurseurs de frittage sont choisis notamment dans le groupe comprenant l'alumine calcinée, l'alumine calcinée réactive, la fumée de silice, les argiles, les particules fines (<50 microns) d'oxydes.

De préférence la couche externe est réalisée en un matériau comportant au moins 4 % et au plus 9 % en poids de carbone, y compris le carbone contenu dans le liant utilisé dont 1.5 % à 6 % sous forme de graphite. Idéalement le carbone total n'excédera pas 5 % en poids total.

La couche externe peut être constituée par un insert fabriqué séparément du corps puis assemblé à ce corps. Elle peut être également copressée en même temps que le corps de la busette.

De préférence, on utilise un même liant pour lier le matériau constituant le corps de la pièce et le matériau constituant la couche externe. L'utilisation d'un même liant apporte une plus grande facilité de fabrication particulièrement dans le cas où la pièce est copressée. En effet, dans ce dernier cas, il serait très difficile, voire impossible de copresser une pièce en utilisant deux liants différents.

Selon un mode de réalisation préféré, le matériau de la couche externe comporte des agents de réduction de la perméabilité. Ces agents sont de préférence choisis dans le groupe constitué par le borax, le carbure de silicium, le carbure de bore, le nitrure de bore et les additions métalliques et particulièrement le silicium. Ces agents de réduction de la perméabilité ont pour but de créer une couche à perméabilité réduite qui s'ajoute à la couche dense oxydée imperméable aux gaz formée par frittage de la paroi du canal de coulée.

Dans une réalisation préférée, la couche externe est constituée d'au moins 80 % d'alumine et n'est pas recouverte d'émail. Elle possède une épaisseur inférieure à 10 mm et l'épaisseur de la couche dense frittée imperméable aux gaz est inférieure à 5 mm.

De préférence l'étape de traitement thermique s'effectue en portant la pièce à une température de 1000°C en moins de 20 mn.

D'autres caractéristiques et avantages de la présente invention apparaîtront encore à la lecture de la description qui suit, d'exemples de réalisation donnés à titre illustratif et nullement limitatif en référence aux figures annexées. Sur ces figures :

- la figure 1 est une vue en coupe longitudinale d'une busette de coulée conforme à la présente invention ;
- les figures 2 et 3 sont des vues partielles à échelle agrandie d'une partie des busettes représentées sur la figure 1;
- la figure 4 est un schéma qui illustre le mode de préchauffage préféré utilisé pour la création d'une couche dense frittée imperméable aux gaz dans une busette conforme à la présente invention;
- la figure 5 est une vue en coupe longitudinale d'une variante de réalisation d'une busette de coulée conforme a l'invention ;
- la figure 6 est une vue en coupe longitudinale d'une quenouille conforme a la présente invention ;

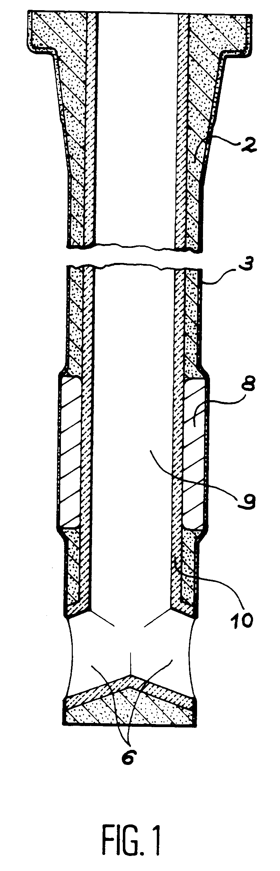

La busette de coulée représentée sur la figure 1 est destinée à être placée sous un répartiteur. Elle peut être fixée sous ce répartiteur en position fixe, par exemple cimentée dans une brique de siège ou par l'intermédiaire d'un mécanisme à baïonnette ou analogue. Elle peut également être placée dans une machine de changement de tube qui permet, de manière connue, de remplacer rapidement un tube par un autre. La busette comporte un corps désigné par la référence 2, une partie supérieure par laquelle l'acier liquide pénètre dans un chenal de coulée 9 qui traverse la busette de part en part. Dans l'exemple de réalisation représenté le métal liquide s'écoule par des ouïes 6 disposées latéralement par rapport au corps. Enfin, de manière connue, la busette de coulée comporte une manchette 8 réalisée en un matériau résistant à l'érosion par la poudre de couverture du moule de coulée. Cette manchette sera placée au niveau de l'acier dans le moule de coulée en continu où de la poudre de couverture flotte sur l'acier liquide. Les deux ouïes 6 débouchent sous le niveau du métal de façon à éviter tout contact avec l'air.

Le corps 2 de la busette est réalisé en un matériau réfractaire traditionnel par exemple un matériau comportant de 20 à 30 % de carbone et un ou plusieurs oxydes réfractaires tel que l'alumine, la zircone, la silice, la magnésie, etc... Le corps 2 est revêtu extérieurement d'une couche d'émail 3 qui a pour but d'éviter l'oxydation du matériau réfractaire durant le préchauffage et l'utilisation. L'intérieur du canal de coulée 9 est constitué d'un matériau réfractaire comprenant une teneur basse en graphite. La perte au feu totale de ce matériau est inférieure à 9 %. Cela signifie que lorsque ce matériau est oxydé durant l'étape de préchauffage de la busette, le graphite qu'il contient et le carbone contenu dans le liant représentent 9 % ou moins du poids de réfractaire. En outre, la chemise 10 comporte une quantité importante d'un oxyde réfractaire tel que l'alumine. Cette quantité est au moins égale à 80 %. Enfin, le matériau constituant la couche 10 comporte des précurseurs de frittage, notamment l'alumine calcinée, l'alumine calcinée réactive, la fumée de silice ou les argiles. Les précurseurs de frittage sont des grains de petite taille, c'est-à-dire des grains dont la surface spécifique est grande. Par suite la surface de contact entre les grains est augmentée. L'alumine calcinée présente une surface spécifique importante et l'alumine calcinée réactive une surface spécifique encore plus importante. La fumée de silice produit une réaction alumine-silice pour créer de la mullite. La densification de la chemise s'opère alors par mullitisation. Les systèmes de type argile créent également des liaisons céramiques à une température relativement basse de l'ordre de 1000 °C à 1100°C

Grâce à la présence de l'un ou plusieurs de ces précurseurs de frittage on peut créer à une temperature relativement basse, par exemple 1000°C, une liaison de type grain à grain entre les grains d'alumine (liaison céramique). Cette couche est dense, dure et possède des pores de faible diamètre. Elle est donc imperméable aux gaz. Cette couche est formée de préférence durant le préchauffage de la busette. L'opération de préchauffage permet d'oxyder le carbone contenu dans la chemise 10 et ainsi de l'éliminer. On obtient de ce fait une couche sans carbone à la surface du canal d'écoulement 9 de la busette. Il convient toutefois de remarquer que, contrairement aux tentatives observées antérieurement, cette couche sans carbone possède une faible épaisseur. A titre d'exemple, si l'épaisseur de la chemise est de 10 mm, l'épaisseur de la couche décarburée sera typiquement de 3 mm, et au maximum de 5 mm. On constate ainsi qu'une partie importante de l'épaisseur de la chemise n'est pas décarburée pendant le prechauffage. En fait, durant cette opération, on observe deux phénomènes simultanées. D'une part l'oxydation du carbone qui augmente la perméabilité du matériau de la chemise dans une proportion d'autant plus importante que la teneur en carbone est plus grande. C'est la raison pour laquelle, de manière générale, la teneur en carbone du matériau de la chemise ne doit pas être élevée et en tous cas elle ne doit pas être supérieure à 9 %. D'autre part, parallèlement à l'oxydation du carbone s'effectue le phénomène de frittage qui tend au contraire à créer une couche imperméable qui s'oppose à la poursuite de la décarburation vers l'intérieur du matériau réfractaire. Pour que la busette fonctionne de façon satisfaisante il est nécessaire que le frittage de la couche superficielle l'emporte rapidement sur son oxydation. C'est la raison pour laquelle on a prévu les précurseurs de frittage qui ont été mentionnés précédemment et qui ont pour but de le faciliter et de l'accélérer.

Il est possible de réaliser la chemise 10 séparément du corps de la busette 2 puis de l'insérer dans ce corps. Toutefois ce n'est pas ce procédé qui a été utilisé pour la réalisation de la busette représentée sur la figure 1. Cette dernière a en effet été réalisée par le procédé dit de copressage isostatique. Deux mélanges, l'un correspondant à la composition du corps 2 de la busette, l'autre à celle de la chemise 10 ont été placés simultanément dans un moule déformable comprenant un mandrin axial destiné à former un évidement correspondant au chenal de coulée 9. L'ensemble a été soumis à un pressage isostatique. Un même liant a été utilisé pour le corps 2 et pour la chemise 10. L'utilisation d'un même liant est un grand avantage parce qu'elle permet de donner une cohésion plus grande à la pièce et assure une meilleure liaison entre le corps 2 et la chemise 10.

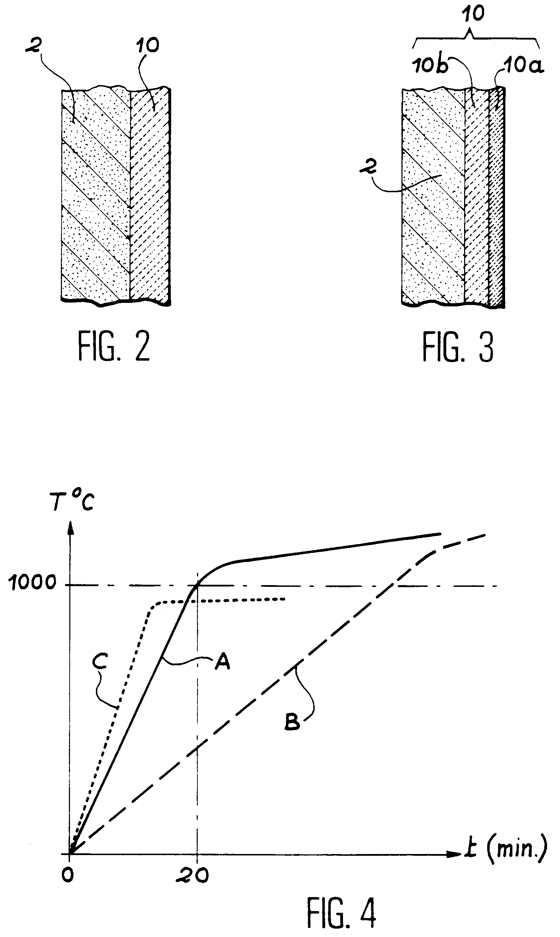

On a représente sur les figures 2 et 3 une partie de la busette de la figure 1 avant l'opération de préchauffage (figure 2) et après le préchauffage (figure 3). Sur la figure 2 on distingue la couche 2 correspondant au corps et la couche 10 correspondant à l'épaisseur de la chemise avant le préchauffage. Sur la figure 3 la couche 2 formant le corps est restée identique. En revanche la couche 10 se décompose désormais en une couche 10a qui constitue la couche dense frittée oxydée imperméable aux gaz décrite précédemment et une couche 10b qui n'a pas été oxydée parce qu'elle a été protégée de l'oxydation par la couche 10a. Sa composition est donc restée identique à la composition initiale qu'elle avait antérieurement au préchauffage. On constate par conséquent que la busette, qui au départ était constituée seulement de deux couches distinctes, se compose maintenant de trois couches différentes. De préférence, on inclut encore des agents de réduction de la perméabilité dans la chemise 10. Ces agents d'imperméabilité sont par exemple le silicium métal, le borax, le carbure de bore ($B_4C$), le nitrure de bore (BN). Ces agents ont pour but de réduire la perméabilité de la couche 10b de manière à former une barrière supplémentaire pour s'opposer a la circulation des gaz entre l'acier liquide circulant dans le chenal de coulée 9 et le corps du matériau réfractaire 2.

On a represente sur la figure 4 un graphique qui illustre la façon correcte de préchauffer une busette de l'invention. Selon la courbe A on a éleve rapidement la température de la busette a une temperature au moins egale à 1000°C. Cette temperature a été mesurée dans le matériau refractaire a l'intérieur du canal 4. Ceci a été effectue en une durée inférieure à 20 mn. En effet, comme on l'a explique antérieurement, deux phénoménes se produisent simultanément durant le préchauffage, d'une part l'oxydation de la couche carbonee et d'autre part la création d'une couche dense frittée.

Si la couche dense frittée imperméable 10a représentée sur la figure 3 ne se forme pas rapidement, l'oxydation se poursuivra dans toute l'épaisseur de la chemise 10 et pourra également atteindre le corps 2. Pour que ceci ne se produise pas il est nécessaire d'atteindre rapidement la température de frittage, c'est-à-dire une température au moins égale à 1000°C comme on l'a schématisé sur la figure 4. Il est donc nécessaire que la puissance des brûleurs utilisés pour le préchauffage soit suffisante pour permettre d'atteindre rapidement cette température.

La courbe B illustre une montée en température trop lente. La température de 1000°C nécessaire pour que le frittage puisse s'effectuer dans de bonnes conditions n'est atteinte qu'après une durée trop longue, nettement supérieure à 20 mn. Dans ces conditions la décarburation de la chemise 10 s'est produite de manière excessive et il ne sera pas possible d'obtenir une couche suffisamment étanche. Sur la courbe C la montée en température est rapide mais la température maximale atteinte reste inférieure à 1000°C. En conséquence, dans ce cas également, le frittage de la couche 10a ne se produira pas dans de bonnes conditions.

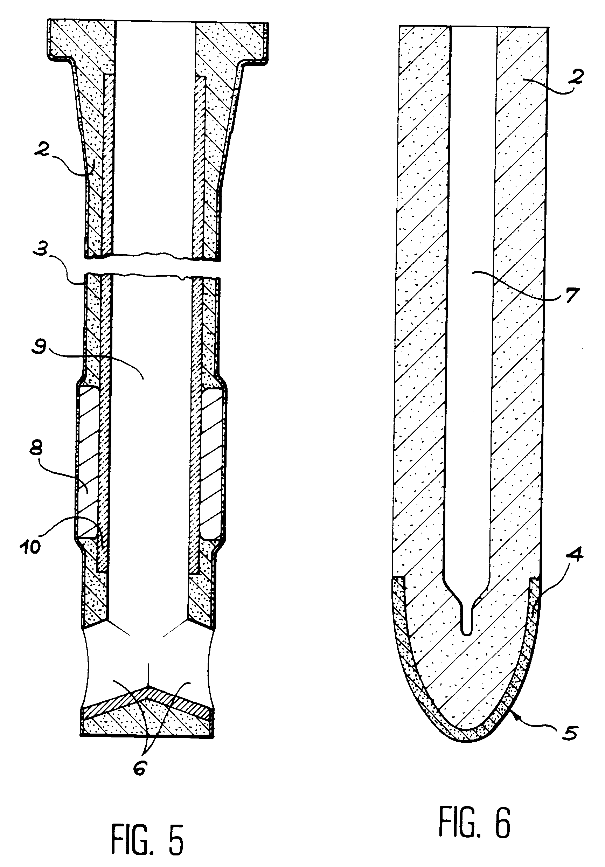

On a représenté sur la figure 5 une variante de réalisation de la busette de la figure 1. La différence réside dans le fait que la chemise 10 ne recouvre pas totalement le canal de coulée 9. La partie supérieure de la busette, appelée zone de siège, la partie inférieure du canal 9 et les ouïes ne sont pas recouvertes par la chemise 10. En outre, de manière classique la busette de l'invention peut être recouverte extérieurement d'une couche d'émail permettant d'éviter l'oxydation du matériau réfractaire durant le préchauffage et l'utilisation. Toutefois cette couche d'émail ne doit pas être présente sur la chemise 10 car elle empêcherait son oxydation pendant le préchauffage et donc sa densification superficielle qui est un effet recherché conformément à la présente invention afin de créer une couche dense frittée comme on l'a expliqué antérieurement.

Sur la figure 6, la quenouille comporte un corps 2 de forme allongée. Un canal axial 7 est laissé dans ce corps par le mandrin de pressage. Le canal axial 7 s'étend de l'extrémité superieure de la quenouille jusqu'à une faible distance de son extrémité inférieure. La partie supérieure du corps peut être raccordée, par des moyens non représentés, à un mécanisme de levage qui permet de la déplacer verticalement afin de réguler l'écoulement de l'acier liquide. A son extrémité inférieure la quenouille comporte un nez arrondi 5. Le corps 2 de la quenouille est réalisé en un matériau refractaire traditionnel, par exemple un matériau comportant de 20 à 30 % de carbone et un ou plusieurs oxydes réfractaires tel que l'alumine, la zircone, la silice, la magnésie etc...

La couche externe 4 du nez 5 est constituée d'un matériau réfractaire comportant une basse teneur en graphite. La perte au feu totale de ce matériau est inférieure à 9 %. Cela signifie que lorsque ce matériau est oxydé durant l'étape de préchauffage de la quenouille, le graphite qu'il contient et le carbone contenu dans le liant representent 9 % ou moins du poids de réfractaires. En outre la couche externe 4 comporte une importante quantité d'un oxyde réfractaire tel que l'alumine. Enfin, le matériau constituant la couche externe 4 du nez comporte des précurseurs de frittage, notamment l'alumine calcinée, l'alumine calcinée réactive, la fumée de silice ou les argiles. La quantite totale d'oxyde réfractaire, est au moins égale à 80 %. Les précurseurs de frittage sont généralement des grains de petite taille, c'est-a-dire des grains dont la surface spécifique est grande. Par suite la surface de contact entre les grains est augmentée. L'alumine calcinée présente une surface spécifique importante et l'alumine calcinee réactive une surface spécifique plus importante encore. La fumée de silice produit une réaction alumine-silice pour créer de la mullite. La densification de la couche 4 s'opére alors par mullitisation. Les systèmes de type argile créent également des liaisons céramiques à une température relativement basse de l'ordre de 1000°C à 1100°C.

Grâce à la presence de l'un ou plusieurs de ces précurseurs de frittage on peut créer à une température relativement basse, par exemple 1000°C, une liaison de grain à grain entre les grains d'alumine (liaison céramique). Cette couche est dense, dure et possède des pores de faible diamètre. Elle est donc imperméable aux gaz. Cette couche est formée de préférence durant le préchauffage de la quenouille, mais elle peut également être réalisée antérieurement. L'opération de préchauffage permet d'oxyder le carbone contenu dans la couche externe 4 et ainsi de l'éliminer. On obtient de ce fait une couche sans carbone à la surface extérieure du nez 5. Il convient de remarquer que cette couche sans carbone possède une faible épaisseur. A titre d'exemple, si l'épaisseur de la couche 4 est de 10 mm, l'épaisseur de la couche décarburée sera typiquement de 3 mm et au maximum de 5 mm. On constate ainsi qu'une partie importante de l'épaisseur de la couche 4 n'est pas décarburée pendant le préchauffage. En fait, durant cette opération, on observe deux phénomènes simultanés. D'une part l'oxydation du carbone qui augmente la perméabilité du matériau de la chemise dans une proportion d'autant plus importante que la teneur en carbone est plus grande. C'est la raison pour laquelle de manière générale, la teneur en carbone du matériau de la chemise ne doit pas être élevée et en tous cas elle ne doit pas être supérieure à 9 %. D'autre part, parallèlement à l'oxydation du carbone s'effectue le phénomène de frittage qui tend au contraire à créer une couche imperméable qui s'oppose à la poursuite de la décarburation vers l'intérieur du matériau réfractaire. Pour que la quenouille fonctionne de façon satisfaisante il est nécessaire que le frittage de la couche superficielle l'emporte rapidement sur son oxydation. C'est la raison pour laquelle on a prévu les précurseurs de frittage qui ont été mentionnés précédemment et qui ont pour but de le faciliter et de l'accélérer.

La quenouille représentée sur la figure 6 a été réalisée par le procédé dit de copressage isostatique. Deux mélanges, l'un correspondant à la composition du corps 2 de la quenouille, l'autre à celle de la couche externe 4 ont été placés simultanément dans un moule déformable comprenant un mandrin axial destiné à former un évidement correspondant au canal 7. L'ensemble a été soumis à un pressage isostatique. Un même liant a été utilisé pour le corps 2 et pour la couche externe 4. L'utilisation d'un même liant est un grand avantage car elle permet de donner une cohésion plus grande à la pièce et assure une meilleure liaison entre le corps 2 et la couche externe 4.

Comme pour l'exemple précédent, la busette qui au départ était constituée de deux couches distinctes se composera de trois couches différentes après une étape de préchauffage. De préférence, on inclue encore des agents de réduction de la perméabilité dans la couche 4. Ces agents d'imperméabilité sont par exemple le silicium métal, le borax, le carbure de bore ($B_4C$), le nitrure de bore (BN). Ces agents ont pour but de réduire la perméabilité de la couche de manière à former une barrière supplémentaire pour s'opposer à la circulation des gaz entre l'acier liquide contenu dans la poche ou dans le répartiteur et le corps du matériau refractaire 2.

EXEMPLE

On donne ci-dessous la composition d'un exemple de mélange pour la constitution d'une couche frittee conforme à l'invention et les propriétés physiques de cette couche avant frittage/oxydation.

| Composition | % en poids |
|---|---|
| Alumine tabulaire ($Al_2O_3$) | 66 |
| Alumine calcinée ($Al_2O_3$) | 21 |
| Graphite (C) | 2 |
| Liant | 6 |
| Silicium métal | 3 |
| Argile | 1 |
| Fumée de silice | 1 |
| | 100 |

| Propriétés physiques | |
|---|---|
| Module de rupture à température ambiante | 10.40 MPa |
| Densité | 2.913 |
| Porosité (%) | 16.190 |
| Gravité (g/cm$^3$) | 3.475 |
| Module d'élasticité | 23.02 GPa |
| Module de rupture à chaud | 4.34 MPa |

## Revendications

1. Pièce pour la coulée d'acier comportant un corps (2) réalisé en un matériau réfractaire comportant du carbone et une couche (4,10) revêtant partiellement ou entièrement le corps, apte à former une couche imperméable au gaz par chauffage, caractérisée en ce que cette couche comporte 4 à 9 % en poids de carbone et au moins un précurseur de frittage, et en ce qu'elle forme une couche (4a, 10a) imperméable aux gaz, oxydée et densifiée lorsqu'elle est portée à une température supérieure ou égale à 1000°C.

2. Pièce selon la revendication 1 caractérisée en ce que le(s) précurseur(s) de frittage sont choisis dans le groupe comprenant l'alumine calcinée, l'alumine calcinée réactive, la fumée de silice, les argiles, les particules fines (<50 microns) d'oxydes.

3. Pièce selon l'une quelconque des revendications 1 et 2, caractérisée en ce que la couche est réalisée en un matériau comportant au moins 4 % et au plus 9 % en poids de carbone, dont 1,5 % à 6 % sous forme de graphite.

4. Pièce selon l'une quelconque des revendications 1 à 3, caractérisée en ce que la couche est constituée par un insert fabriqué séparément du corps (2) puis assemblé à ce corps (2).

5. Pièce selon l'une quelconque des revendications 1 à 3, caractérisée en ce que la couche est copressée avec le corps (2) de la pièce.

6. Pièce selon l'une quelconque des revendications 1 à 5 caractérisée en ce qu'un même liant est utilisé pour le matériau constituant le corps (2) de la pièce et le matériau constituant la couche (4,10).

7. Pièce selon l'une quelconque des revendications 1 à 6 caractérisée en ce que le matériau de la couche (4,10) comporte des agents de réduction de la perméabilité.

8. Pièce selon la revendication 7 caractérisée en ce que les agents de réduction de la perméabilité sont choisis dans le groupe comprenant le borax, le carbure de silicium, le carbure, de bore le nitrure de bore, et les additions métalliques, particulièrement le silicium.

9. Pièce selon l'une quelconque des revendications 1 à 8 caractérisée en ce que la couche (10) est constituée d'au moins 80 % d'alumine.

10. Pièce selon l'une quelconque des revendications 1 à 9 caractérisée en ce que la couche (4,10) n'est pas recouverte d'émail.

11. Pièce selon l'une quelconque des revendications 1 à 10 caractérisée en ce que la couche posséde une epaisseur intérieure à 10 mm.

12. Pièce selon l'une quelconque des revendications 1 à 11 caractérisée en ce que l'épaisseur de la couche (4,10) densifiée imperméable est inférieure à 5 mm.

13. Procédé pour former une couche densifiée imperméable aux gaz sur la surface d'une pièce pour la coulée d'acier selon l'une quelconque des revendications 1 à 12, selon lequel on soumet la pièce à un traitement thermique à une température supérieure ou égale à 1000°C.

14. Procédé selon la revendication 13 caractérisé en ce que le traitement thermique s'effectue en portant la pièce à une température de 1000°C en moins de 20 min.

15. Pièce selon l'une quelconque des revendications 1 à 12 caractérisée en ce que cette pièce est une busette de coulée.

16. Pièce selon l'une quelconque des revendications 1 à 12 caractérisée en ce que cette pièce est une quenouille de coulée.

**Claims**

1. Part for casting steel incorporating a member (2) made from a refractory material containing carbon and a coating (4, 10) partly or wholly covering the member, able to form a coating impermeable to gases by heating, characterized in that said coating contains 4 to 9% by weight carbon and at least one sintering precursor, and in that it forms a coating (4a, 10a) impermeable to gases, oxidized and densified when raised to a temperature equal to or higher than 1000°C.

2. Part according to claim 1, characterized in that the sintering precursor or precursors are chosen from within the group comprising calcined alumina, reactive calcined alumina, fume silica, clays and fine oxide particles ( < 50 microns).

3. Part according to either of the claims 1 and 2, characterized in that the coating is made from a material containing at least 4% and at the most 9% by weight carbon, whereof 1.5 to 6% are in graphite form.

4. Part according to any one of the claims 1 to 3, characterized in that the coating is constituted by an insert manufactured separately from the member (2) and then assembled with said member (2).

5. Part according to any one of the claims 1 to 3, characterized in that the coating is copressed with the member (2) of the part.

6. Part according to any one of the claims 1 to 5, characterized in that the same binder is used for the material constituting the member (2) of the part and the material constituting the coating (4, 10).

7. Part according to any one of the claims 1 to 6, characterized in that the material of the coating (4, 10) incorporates permeability reducing agents.

8. Part according to claim 7, characterized in that the permeability reducing agents are chosen from within the group comprising borax, silicon carbide, boron carbide, boron nitride, and metallic additions, particularly silicon.

9. Process according to any one of the claims 1 to 8, characterized in that the coating (10) is constituted by at least 80% alumina.

10. Part according to any one of the claims 1 to 9, characterized in that the coating (4, 10) is not covered with enamel.

11. Part according to any one of the claims 1 to 10, characterized in that the coating has a thickness less than 10 mm.

12. Part according to any one of the claims 1 to 11, characterized in that the thickness of the impermeable, densified coating (4, 10) is below 5 mm.

13. Process for forming a gas-impermeable, densified coating on the surface of a part for the casting of steel according to any one of the claims 1 to 12, according to which the part undergoes a heat treatment at a temperature equal to or above 1000°C.

14. Process according to claim 13, characterized in that the heat treatment takes place by raising the part to a temperature of 1000°C in less than 20 minutes.

15. Part according to any one of the claims 1 to 12, characterized in that said part is a pouring spout.

16. Part according to any one of the claims 1 to 12, characterized in that said part is a pouring stopper rod.

**Patentansprüche**

1. Teil für das Gießen von Stahl, einen Körper (2) aus einem refraktären bzw. keramischen Material umfassend, das Kohlenstoff enthält, und eine den Körper ganz oder teilweise bedeckende Schicht (4, 10), die fähig ist, durch Erhitzung eine gasundurchlässige Schicht zu bilden,
   **dadurch gekennzeichnet,**
   daß diese Schicht 4 bis 9 Gew.% Kohlenstoff und wenigstens einen Sintervorläufer enthält, und dadurch, daß sie eine gasundurchlässige, oxidierte und verdichtete Schicht (4a, 10a) bildet, wenn sie auf eine Temperatur über oder gleich 1000°C gebracht wird.

2. Teil nach Anspruch 1, dadurch gekennzeichnet, daß der (die) Sintervorläufer aus der Gruppe ausgewählt wird (werden), die kalziniertes bzw. ausgeglühtes Aluminiumoxid, reaktives kalziniertes Aluminiumoxid, Siliziumdioxidrauch, Tone und die feinen Partikel (<50μm) von Oxiden enthält.

3. Teil nach einem der Ansprüche 1 und 2, dadurch gekennzeichnet, daß die Schicht aus einem Material hergestellt wird, das wenigstens 4 Gew.% und höchstens 9 Gew.% Kohlenstoff enthält, davon 1,5% bis 6% in Form von Graphit.

4. Teil nach einem der Ansprüche 1 bis 3, dadurch gekennzeichnet, daß die Schicht durch einen separat vom Körper (2) gefertigten Einsatz gebildet und dann mit diesem Körper (2) zusammengebaut wird.

5. Teil nach einem der Ansprüche 1 bis 3, dadurch gekennzeichnet, daß die Schicht mit dem Körper (2) des Teils zusammengepreßt wird.

6. Teil nach einem der Ansprüche 1 bis 5, dadurch gekennzeichnet, daß für das den Körper (2) des Teils bildende Material und das die Schicht (4, 10) bildende Material dasselbe Bindemittel verwendet wird.

7. Teil nach einem der Ansprüche 1 bis 6, dadurch gekennzeichnet, daß das Material der Schicht (4, 10) Wirkstoffe zur Reduzierung der Permeabiltät enthält.

8. Teil nach Anspruch 7, dadurch gekennzeichnet, daß die Wirkstoffe zur Reduzierung der Permeabiltät aus der Gruppe ausgewählt werden, die Borax, Siliziumkarbid, Borkarbid, Bornitrid und die metallischen Zusätze umfaßt, insbesondere Silizium.

9. Teil nach einem der Ansprüche 1 bis 8, dadurch gekennzeichnet, daß die Schicht (10) zu wenigstens 80% aus Aluminiumoxid besteht.

10. Teil nach einem der Ansprüche 1 bis 9, dadurch gekennzeichnet, daß die Schicht (4, 10) nicht mit Email überzogen ist.

11. Teil nach einem der Ansprüche 1 bis 10, dadurch gekennzeichnet, daß die Schicht eine Dicke unter 10mm hat.

12. Teil nach einem der Ansprüche 1 bis 11, dadurch gekennzeichnet, daß die Dicke der verdichteten undurchlässigen Schicht kleiner als 5mm ist.

13. Verfahren zur Bildung einer verdichteten gasundurchlässigen Schicht auf der Oberfläche eines Teils für das Gießen von Stahl gemäß einem der Ansprüche 1 bis 12, nach dem man das Teil einer Wärmebehandlung mit einer Temperatur über oder gleich 1000°C unterzieht.

14. Verfahren nach Anspruch 13, dadurch gekennzeichnet, daß die Wärmebehandlung erfolgt, indem man das Teil in weniger als 20 Minuten auf eine Temperatur von 1000°C bringt.

15. Teil nach einem der Ansprüche 1 bis 12, dadurch gekennzeichnet, daß dieses Teil ein Gießrohr ist.

16. Teil nach einem der Ansprüche 1 bis 12, dadurch gekennzeichnet, daß dieses Teil ein Gießstopfer bzw. eine Gieß-Stopfstange ist.

FIG. 1

FIG. 2

FIG. 3

FIG. 4

FIG. 5

FIG. 6